# EUROPÄISCHE PATENTANMELDUNG

(11) **EP 1 538 736 A2**
(43) Veröffentlichungstag der Anmeldung: **08.06.2005**
(21) Anmeldenummer: 04026861.7
(22) Anmeldetag: 11.11.2004
(51) Int. Cl.: H02P 3/18

(54) **Antriebssystem**

(30) Priorität: 03.12.2003 DE 10356515
(71) Anmelder: SIEMENS AKTIENGESELLSCHAFT, 80333 München (DE)
(72) Erfinder: Eckardt, Dieter, Dr., 91074 Herzogenaurach (DE)

(57) **Zusammenfassung**

Die Erfindung bezieht sich auf ein Antriebssystem mit einer zentralen Einspeisung (2) und mehreren motorseitigen Stromrichtern (4), die jeweils gleichspannungsseitig mit einem geregelten Gleichspannungs-Ausgang der zentralen Einspeisung (2) verknüpft sind, wobei diese zentrale Einspeisung (2) eingangsseitig einen netzgeführten Stromrichter (12) und ausgangseitig mit einem DC/DC-Wandler (14), der ein- und ausgangsseitig jeweils mit einem Pufferkondensator (16, 18) versehen ist, aufweist. Erfindungsgemäß ist eine Rückspeiseeinrichtung (28) vorgesehen, die eingangsseitig mit dem geregelten Ausgang der zentralen Einspeisung (2) und ausgangsseitig mit wenigstens zwei Eingängen des netzgeführten Stromrichters (12) verknüpft ist. Somit erhält man ein Antriebssystem, das nicht mehr auf eine platzraubende Bremsschaltung angewiesen ist.

## Beschreibung

Die Erfindung bezieht sich auf ein Antriebssystem gemäß Oberbegriff des Anspruchs 1.

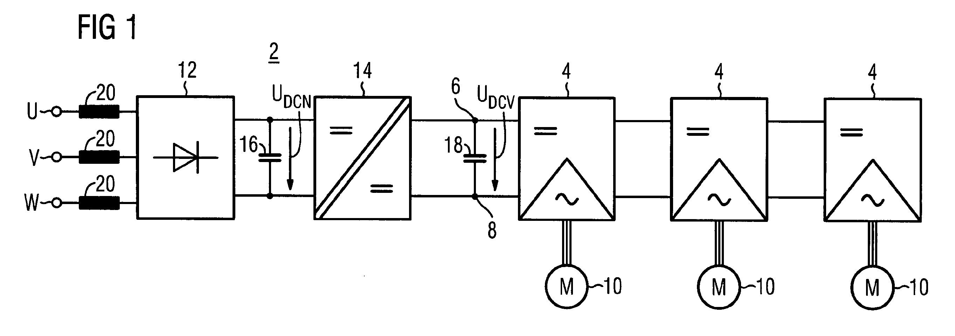

Ein derartiges Antriebssystem ist in der Figur 1 näher dargestellt. Dieses bekannte Antriebssytem weist eingangsseitig eine zentrale Einspeisung 2 und ausgangsseitig mehrere motorseitige Stromrichter 4 auf, die jeweils gleichspannungsseitig mit Anschlüssen 6 und 8 eines geregelten Gleichspannungs-Ausgangs der zentralen Einspeisung 2 verknüpft sind. Wechselspannungsseitig ist jeder motorseitige Stromrichter 4 mit einem mehrphasigen Motor 10 verbunden. Die zentrale Einspeisung 2 weist eingangsseitig einen netzgeführten Stromrichter 12 und ausgangsseitig einen DC/DC-Wandler 14 auf. Gleichspannungsseitig sind der netzgeführte Stromrichter 12 und der DC/DC-Wandler 14 mittels eines Pufferkondensators 16 elektrisch leitend verbunden. Ausgangsseitig weist der DC/DC-Wandler 14 ebenfalls einen Pufferkondensator 18 auf. Der netzgeführte Stromrichter 12 ist dreiphasig ausgebildet und eingangsseitig jeweils mittels einer Netzdrossel 20 mit einem Netz-Anschluss U, V und W eines nicht näher dargestellten speisenden Netzes verbunden. Dieser netzgeführte Stromrichter 12 erzeugt aus anstehenden Phasenspannungen Uᵤ, Uᵥ und U_{w} des speisenden Netzes eine gleichgerichtete Spannung U_{DCN}, die am Pufferkondensator 16 ansteht. Aus dieser gleichgerichteten Spannung U_{DCN} wird mittels des DC/DC-Wandlers 14 eine vorbestimmte geregelte Gleichspannung U_{DCV}, auch als Versorgungsspannung bezeichnet, erzeugt, die am ausgangsseitigen Pufferkondensator 18 ansteht.

Bei diesen wechselrichtergespeisten Motoren 10 kann es betriebsbedingt vorkommen, dass diese abgebremst werden müssen. Beim Bremsvorgang wird mechanische Energie als elektrische Energie in den ausgangsseitigen Pufferkondensator 18 zurückgespeist. Da prozessbedingt alle Motoren 10 zeitgleich in den generatorischen Betrieb gehen, ist kein Verbraucher vorhanden, der die rückspeisende Energie verbrauchen könnte. Da die zentrale Einspeisung 2 netzseitig einen netzgeführten Gleichrichter als netzgeführten Stromrichter 12 aufweist, kann die zurückgespeiste Energie nicht in das speisende Netz zurückgespeist werden. Selbst wenn dieser netzseitige Stromrichter 12 rückspeisefähig ausgebildet wäre, wäre eine Rückspeisung der zurückgespeisten Energie nicht möglich, da die zentrale Einspeisung 2 ausgangsseitig einen DC/DC-Wandler 14 aufweist. Mittels eines DC/DC-Wandlers 14 kann Energie nur in einer Richtung geführt werden. Somit muss darauf geachtet werden, dass am ausgangsseitigen Pufferkondensator 18 der zentralen Einspeisung 2 die anstehende Versorgungsspannung U_{DCV} einen vorbestimmten Grenzwert nicht überschreitet. Wird dieser Grenzwert erreicht bzw. überschritten, so wird das Antriebssystem aus Sicherheitsgründen abgeschaltet.

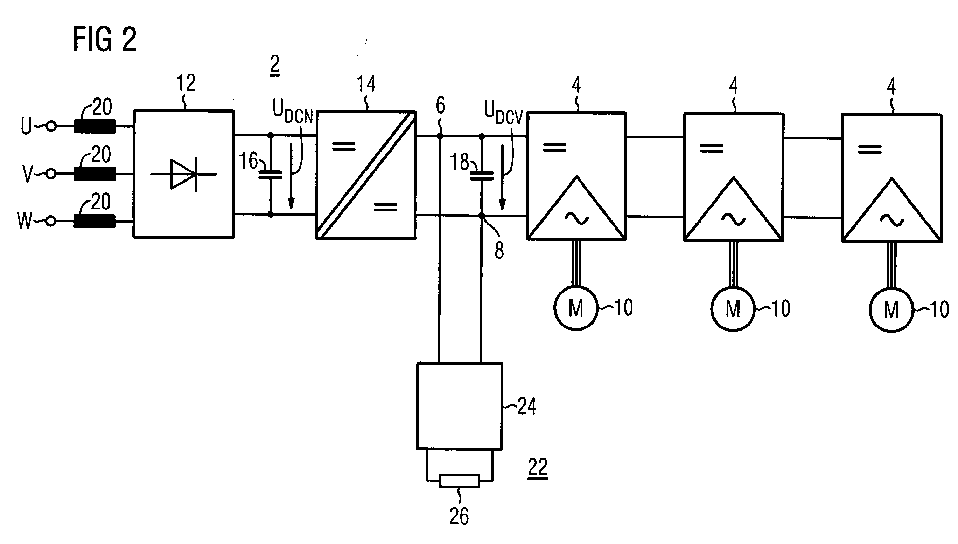

Damit eine Überspannung an diesem Kondensator 18 nicht auftritt und damit eine Sicherheitsabschaltung des Antriebssystems verhindert wird, ist eine Bremsschaltung 22 vorgesehen. Ein derartiges Antriebssystem mit einer Bremsschaltung 22 ist in der Figur 2 näher dargestellt. Diese Bremsschaltung 22 weist einen Bremssteller 24, auch als Bremsschopper bezeichnet, und einen Bremswiderstand 26 auf. Dieser Bremschopper 22 ist elektrisch parallel zu den Anschlüssen 6 und 8 des geregelten Gleichspannungs-Ausgangs der zentralen Einspeisung 2 geschaltet. Mittels dieser Bremsschaltung 22 wird die Versorgungsspannung U_{DCV} am Kondensator 18 auf einen vorbestimmten Wert gehalten, indem die von den Motoren 10 kommende Energie im Bremswiderstand 26 in Wärme umgesetzt wird. Dieser Bremswiderstand 26 muss derart dimensioniert werden, dass dieser die anfallende rückspeisende Energie in Wärme umsetzen kann. Deshalb muss unter Umständen dieser Widerstand 26 gekühlt werden. Zumindest beansprucht dieser Bremswiderstand 26 einen nicht zu vernachlässigenden Platz.

Bei bekannten Fördersystemen werden die Förderstrecken aus einzelnen Förder-Modulen zusammengesetzt. Jedes Förder-Modul weist mehrere Rollen, wenigstens einen Rollenantrieb und einen zugehörigen motorseitigen Stromrichter auf. Beim Zusammensetzen dieser kompakten Förder-Module müssen diese nur noch mechanisch und elektrisch miteinander verknüpft werden. Bei einem derartigen Fördersystem sind die motorseitigen Stromrichter gleichspannungsseitig untereinander verknüpft. Diese gleichspannungsseitigen, miteinander verknüpften Stromrichter sind mit Gleichspannungs-Anschlüssen einer zentralen Einspeisung 2 verbunden. Diese zentrale Einspeisung ist zentral zum Fördersystem bzw. zu einem Teil-Fördersystem angeordnet. Um ein Fördergut bei kleinsten Taktzeiten zu positionieren und gegebenenfalls auf andere Förderstrecken umzusetzen, sind schnelle Bremsvorgänge erforderlich, bei denen mechanische Energie in den ausgangsseitigen Kondensator der zentralen Einspeisung als elektrische Energie zurückgespeist wird. Im Allgemeinen müssen alle Antriebe gleichzeitig abgebremst werden, so dass stets alle Antriebe gleichzeitig in den generatorischen Betrieb gehen. Damit das Antriebssystem des Fördersystems nicht aus Sicherheitsgründen abgeschaltet werden muss, ist die zentrale Einspeisung ausgangsseitig mit einer Bremsschaltung versehen. Diese ist auch zentral zum Fördersystem bzw. Teil-Fördersystem angeordnet. Ein derartiges Antriebssystem eines bekannten Fördersystems ist beispielsweise in der Figur 2 näher dargestellt.

Dieses Antriebssystem eines Fördersystems erzeugt aus einer Netzspannung von beispielsweise 380V eine gleichgerichtete Spannung U_{DCN} mit einer Amplitude von beispielsweise 540V, die mit einem Wechselanteil mit 6-facher Netzfrequenz überlagert ist. Die motorseitigen Stromrichter 10 benötigen eine Versorgungsspannung U_{DCV} mit einer auf beispielsweise 48V geregelten Amplitude. Aus diesem Grund weist die zentrale Einspeisung 2 ausgangsseitig einen DC/DC-Wandler 14 auf, der aus der eingangsseitig gleichgerichteten Netzspannung U_{DVN} eine geregelte Versorgungsspannung U_{DCV} mit einer Amplitude von beispielsweise 48V erzeugt. Durch die Verwendung dieser Kleinspannung müssen keine erhöhten Anforderungen an der Kabelauswahl und - verlegung eingehalten werden.

Der Erfindung liegt nun die Aufgabe zugrunde, das bekannte Antriebssystem derart weiterzubilden, dass auf eine Bremsschaltung verzichtet werden kann.

Diese Aufgabe wird erfindungsgemäß mit dem kennzeichnenden Merkmal des Anspruchs 1 bzw. 12 gelöst.

Durch die Verwendung einer Rückspeiseschaltung, die eingangsseitig mit dem geregelten Ausgang der zentralen Einspeisung und ausgangsseitig mit wenigstens zwei Eingängen des netzgeführten Stromrichters der zentralen Einspeisung verknüpft sind. Durch Rückspeisung von Energie mittels dieser Rückspeiseeinrichtung vom ausgangsseitigen Kondensator der zentralen Einspeisung in ein speisendes Netz, wird die geregelte Spannung am ausgangsseitigen Kondensator der zentralen Einspeisung auf einen vorbestimmten Wert gehalten. Durch die Verwendung einer Rückspeiseschaltung kann auf die Bremsschaltung verzichtet werden. Dadurch wird nicht nur Platz eingespart, sondern auch der Wirkungsgrad des Antriebssystems wesentlich verbessert. Außerdem ist diese Rückspeiseeinrichtung gegenüber einer Bremsschaltung wesentlich preisgünstiger.

Bei einer vorteilhaften Ausführungsform des Antriebssystems weist die Rückspeiseeinrichtung eingangsseitig einen DC/DC-Wandler und ausgangsseitig einen netzgeführten bidirektionalen Gleichrichter auf, die gleichspannungsseitig miteinander verknüpft sind. Durch diese Ausführungsform kann auch dann Energie in ein speisendes Netz zurückgespeist werden, wenn die geregelte Gleichspannung am ausgangsseitigen Kondensator der zentralen Einspeisung kleiner als ein Gleichrichtwert der Netzspannung des speisenden Netzes ist. Somit kann dieses erfindungsgemäße Antriebssystem bei einem modularen Fördersystem verwendet werden. Mittels dem DC/DC-Wandler wird aus der geregelten Ausgang-Gleichspannung der zentralen Einspeisung eine Gleichspannung generiert, dessen Amplitudenwert größer als der Gleichrichtwert der Netzspannung des speisenden Netzes ist. Erst dann wird ein Strom durch den netzgeführten bidirektionalen Gleichrichter ins Netz fließen.

Bei einer weiteren vorteilhaften Ausführungsform des Antriebssystems weist der DC/DC-Wandler eine Hilfsstromversorgungs-Einrichtung auf. Mit dieser Hilfsstromversorgungs-Einrichtung kann eine Steuereinrichtung des netzgeführten bidirektionalen Gleichrichters versorgt werden. Dadurch wird die Rückspeiseschaltung preiswerter, da auf eine externe Stromversorgungseinrichtung für die Steuereinrichtung des netzgeführten bidirektionalen Gleichrichters verzichtet werden kann.

Weitere vorteilhafte Ausführungsformen sind den Unteransprüchen 5 bis 11 zu entnehmen.

Weist die zentrale Einspeisung eingangsseitig bereits einen netzgeführten bidirektionalen Gleichrichter auf, so vereinfacht sich nicht nur die Rückspeiseeinrichtung erheblich, sondern auch deren Verschaltung in das Antriebssystem. Nun muss nur noch der ausgangsseitige nichtrückspeisefähige DC/DC-Wandler der zentralen Einspeisung für die Energierichtung von den Verbrauchern zum speisenden Netz überbrückt werden. Deshalb wird diese Rückspeiseeinrichtung ausgangsseitig mit dem Gleichspannungs-Ausgang des netzgeführten bidirektionalen Gleichrichters der zentralen Einspeisung verknüpft.

Bei einer vorteilhaften Ausführungsform dieses Antriebssystems weist die Rückspeiseeinrichtung nur einen DC/DC-Wandler auf. Durch diese Ausführungsform kann auch dann Energie in ein speisendes Netz zurückgespeist werden, wenn die geregelte Gleichspannung am ausgangsseitigen Kondensator der zentralen Einspeisung kleiner als ein Gleichrichtwert der Netzspannung des speisenden Netzes ist. Mittels dieses DC/DC-Wandlers kann die am ausgangsseitigen Kondensator anstehende Spannung derart in eine Gleichspannung gewandelt werden, dass deren Amplitude den Gleichrichtwert der Netzspannung des speisenden Netzes um einen vorbestimmten Betrag übersteigt. Dadurch wird ein Strom vom ausgangsseitigen Kondensator der zentralen Einspeisung durch deren eingangsseitigen netzgeführten bidirektionalen Gleichrichter in ein speisendes Netz getrieben. Somit eignet sich dieses erfindungsgemäße Antriebssystem auch für ein modulares Fördersystem.

Weitere vorteilhafte Ausführungsformen sind den Unteransprüchen 13 bis 15 zu entnehmen.

Zur näheren Erläuterung der Erfindung wird auf die Zeichnung bezug genommen, in der mehrere Ausführungsformen des erfindungsgemäßen Antriebssystems schematisch veranschaulicht sind.
- FIG 1: zeigt ein bekanntes Antriebssystem, in dem
- FIG 2: ist das bekannte Antriebssystem nach FIG 1 mit einer Bremsschaltung veranschaulicht, die
- FIG 3: zeigt eine erste Ausführungsform einer vorteilhaften Rückspeiseeinrichtung gemäß der Erfindung, wobei in der
- FIG 4: eine weitere Ausführungsform einer vorteilhaften erfindungsgemäßen Rückspeiseeinrichtung dargestellt ist, die
- FIG 5: zeigt eine erste Ausführungsform eines erfindungsgemäßen Antriebssystems und in der
- FIG 6: ist eine zweite Ausführungsform eines erfindungsgemäßen Antriebssystems dargestellt.

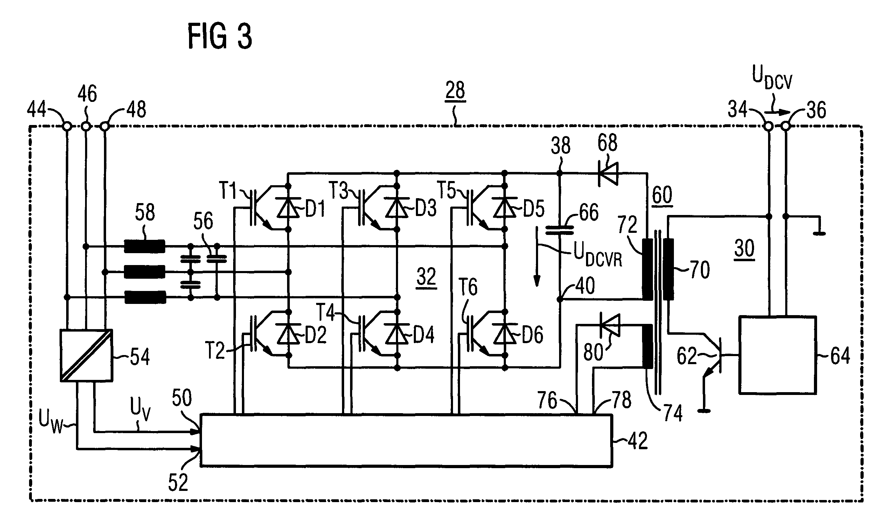

In der FIG 3 ist eine erste Ausführungsform einer erfindungsgemäßen Rückspeiseeinrichtung 28 näher dargestellt. Diese Rückspeiseeinrichtung 28 weist eingangsseitig einen DC/DC-Wandler 30 und ausgangsseitig einen netzgeführten bidirektionalen Gleichrichter 32 auf, die gleichspannungsseitig miteinander verknüpft sind. An den Eingangs-Anschlüssen 34 und 36 der Rückspeiseeinrichtung 28 steht die Versorgungsspannung U_{DCV} für die motorseitigen Stromrichter 4 an. An den Ausgangs-Anschlüssen 38 und 40 des DC/DC-Wandlers 30 steht eine Spannung U_{DCVR} an, deren Amplitude größer als ein Gleichrichtwert der Netzspannung eines speisenden Netzes ist. Deshalb wird auch diese Spannung U_{DCVR} als Rückspeisespannung bezeichnet. Da der ausgangsseitige netzgeführte bidirektionale Gleichrichter 32 der Rückspeiseeinrichtung 28 für beide Stromrichtungen leitend ist, wird durch das Spannungsgefälle zwischen der Rückspeisespannung U_{DCVR} und dem Gleichrichtwert der Netzspannung ein Strom durch den Gleichrichter 32 in das speisende Netz getrieben.

Der netzgeführte bidirektionale Gleichrichter 32 ist in dieser Darstellung dreiphasig ausgebildet. Dadurch weist dieser Gleichrichter 32 drei Brückenzweige auf, die jeweils zwei elektrisch in Reihe geschaltete Dioden D1, D2 bzw. D3, D4 bzw. D5, D6 aufweisen. Damit ein netzgeführter Gleichrichte Strom in beide Richtungen führen kann, ist jeder Diode D1-D6 ein elektronisch steuerbarer Schalter T1-T6 elektrisch parallel geschaltet, die jeweils synchron zu den Leitphasen korrespondierender Dioden D1-D6 gesteuert werden. Diese Leitphasen werden durch die natürlichen Kommutierungspunkte bestimmt. Ein Schnittpunkt zweier Netzspannungen ist ein natürlicher Kommutierungspunkt. Damit diese elektronisch steuerbaren Schalter T1-T6, insbesondere Insulated-Gate-Bipolar-Transistoren, synchron zu den Leitphasen korrespondierender Dioden D1-D6 gesteuert werden können, sind diese steuerungsseitig mit einer Steuereinrichtung 42 verknüpft, an deren Eingängen wenigstens zwei Phasenspannungen Uᵥ und U_{w} anstehen. Zwischen den Ausgangs-Anschlüssen 44, 46 und 48 der Rückspeiseschaltung 28 und den Eingangs-Anschlüssen 50 und 52 der Steuereinrichtung 42 ist eine Potentialtrenneinrichtung 54, insbesondere ein Optokoppler, angeordnet. Ausgangsseitig weist der netzgeführte bidirektionale Gleichrichter 32 noch Kondensatoren 56, die in Dreieck geschaltet sind, und jeweils eine Netzdrossel 58 auf. Jede Netzdrossel 58 ist mit einem netzseitigen Anschluss mit einem Ausgangs-Anschluss 44, 46 und 48 der Rückspeiseschaltung 28 verknüpft. Ein derartiger netzgeführter bidirektionaler Gleichrichter 32 ist aus der DE 35 39 027 A1 bekannt. Eine Ausführungsform der Steuereinrichtung 42 ist der DE 199 13 634 C2 zu entnehmen.

Als DC/DC-Wandler 30 ist in dieser Ausführungsform gemäß FIG 3 ein Sperrwandler vorgesehen. Dieser Sperrwandler weist einen Spannungstransformator 60, einen elektronisch steuerbaren Schalter 62, einen Schaltregler 64, einen Pufferkondensator 66 und eine Diode 68 auf. Der elektronisch steuerbare Schalter 62 ist elektronisch in Reihe zur Primärwicklung 70 des Spannungstransformators 60 geschaltet. Als elektronisch steuerbarer Schalter 68 ist ein Transistor vorgesehen, der steuerungsseitig mit dem Schaltregler 64 verbunden ist. Der Pufferkondensator 66 ist elektrisch zur Reihenschaltung der Diode 68 und der Sekundärwicklung 72 des Spannungswandlers 60 geschaltet. Mittels der Taktung des Schalters 62 wird aus der eingangsseitigen Spannung U_{DCV} eine Rückspeisespannung U_{DCVR} generiert, die am Pufferkondensator 66 ansteht. Elektrisch parallel zu diesen Pufferkondensator 66 ist der netzgeführte bidirektionale Gleichrichter 32 gleichspannungsseitig geschaltet. Der Schaltregler 64 wird aktiviert, sobald die eingangsseitige Versorgungsspannung U_{DCV} einen vorbestimmten Grenzwert überschreitet. Dadurch wird der DC/DC-Wandler 30 nur bei Bedarf getaktet.

In der dargestellten Ausführungsform der Rückspeiseschaltung 28 weist der Spannungstransformator 60 des Sperrwandlers eine Hilfswicklung 74 auf, die ausgangsseitig mit Versorgungs-Anschlüsse 76 und 78 der Steuereinrichtung 42 verbunden ist. In diesem Stromkreis ist eine Diode 80 derart angeordnet, dass Strom nur zur Steuereinrichtung 42 fließen kann. Taktet man nun den elektronisch steuerbaren Schalter 62 nicht nur bei Bedarf, sondern immer zu einem vorbestimmten Grad, so wird die Steuereinrichtung 42 mittels dieser Hilfsstromversorgungs-Einrichtung versorgt. Diese vorbestimmte Grundtaktung kann durch die Wahl eines Pulsbreitenverhältnisses oder durch eine Taktfrequenz bei einer konstanten Pulsbreite eingestellt werden.

Mittels dieser erfindungsgemäß ausgestalteten Rückspeiseeinrichtung 28 kann von den stromrichtergespeisten Motoren 10 zurückgespeiste Energie nun ohne großen Aufwand in ein speisendes Netz des Antriebssystems zurückgespeist werden. Dadurch verbessert sich nicht nur der Wirkungsgrad des Antriebssystems, sondern ist auch gegenüber einen bekannten Antriebssystem mit Bremsschaltung preiswerter. Außerdem benötigt diese erfindungsgemäße Rückspeiseeinrichtung 28 gegenüber einer handelsüblichen Bremsschaltung 22 deutlich weniger Platz.

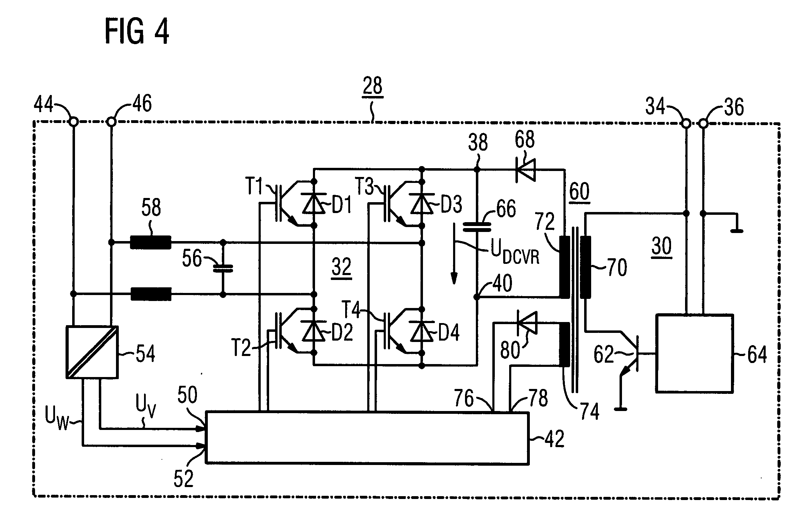

In der FIG 4 ist eine zweite Ausführungsform der erfindungsgemäßen Rückspeiseeinrichtung 28 näher dargestellt. Diese Ausführungsform unterscheidet sich von der Ausführungsform gemäß FIG 3 nur dadurch, dass der netzgeführte bidirektionale Gleichrichter 32 zweiphasig ausgebildet ist. D.h., der Gleichrichter bildet eine H-Brücke. Wegen dieser zweiphasigen Ausführung des netzgeführten bidirektionalen Gleichrichters 32 werden die Einschaltdauern der jeweiligen elektronisch steuerbaren Schalter T1-T4 auf eine Zeitspanne um das Netzspannungsmaximum herum eingeschränkt, um den ausgangsseitigen Kondensator 56 nicht ständig aufzuladen bzw. zu entladen. Über diese Einschaltdauer kann der entstehende kapazitive Netzstrom verändert werden. Durch eine Variation der Einschaltdauer im Betrieb kann stets der beste Kompromiss zwischen rückspeisender Energie und erzeugter kapazitiver Blindleistung gefunden werden. Der Betrieb des Sperrwandlers hat sich gegenüber der Ausführungsform der Rückspeiseeinrichtung 28 gemäß FIG 3 nicht verändert.

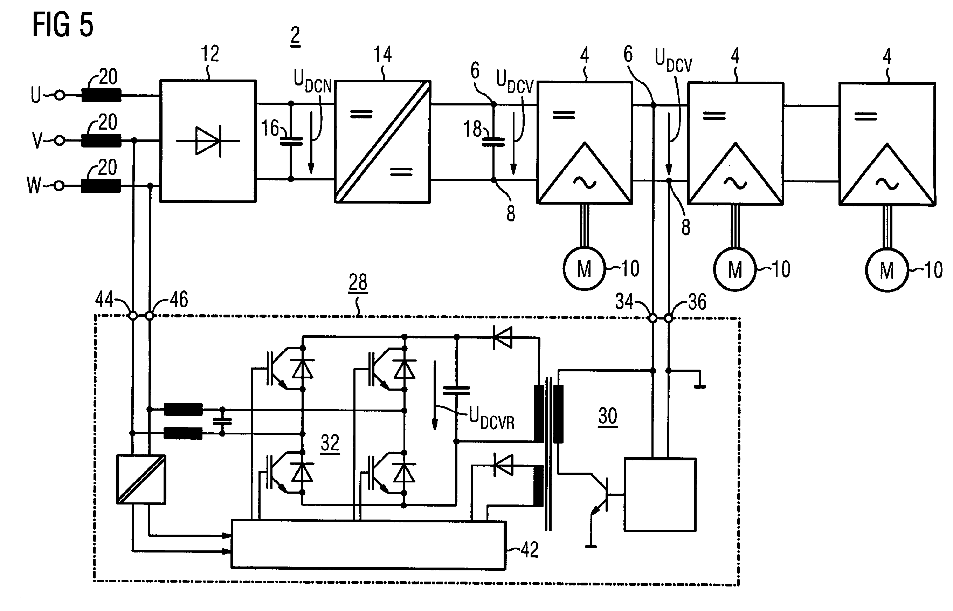

Die FIG 5 zeigt eine erste Ausführungsform eines Antriebssystem nach der Erfindung. Dieses erfindungsgemäße Antriebssystem besteht aus dem Antriebssystem gemäß FIG 1 und der erfindungsgemäßen Rückspeiseeinrichtung 28 gemäß FIG 4. Diese Rückspeiseeinrichtung 28 ist mit ihren Eingangs-Anschlüssen 34 und 36 mit dem Ausgangsanschlüssen 6 und 8 der zentralen Einspeisung 2 des Antriebssystem verbunden. Ausgangsseitig ist diese Rückspeiseeinrichtung 28 mit Eingängen des netzgeführten Gleichrichters 12 verknüpft. Wenn betriebsbedingt die stromrichtergespeisten Motoren 10 alle in den generatorischen Betrieb gehen, dann wird mechanische Energie als elektrische Energie in den ausgangsseitigen Kondensator 18 zurückgespeist. Dadurch steigt die anstehende Versorgungsspannung U_{DCV} an. Sobald die Amplitude dieser Versorgungsspannung U_{DCV} einen vorbestimmten Wert übersteigt, wird die Taktung des DC/DC-Wandlers 30 derart verändert, dass außerdem aus der anstehenden Versorgungsspannug U_{DCV} eine Rückspeisespannung U_{DCVR} generiert wird, deren Amplitude größer dem Gleichrichtwert der Netzspannung ist. Diese Rückspeisespannung U_{DCVR} treibt einen Strom durch den Gleichrichter 32 in das speisende Netz des Antriebssystems. Durch diese erfindungsgemäße Rückspeiseeinrichtung 28 wird eine platzraubende Bremsschaltung 22 nicht mehr benötigt, so dass nicht nur Platz eingespart wird, sondern auch noch der Wirkungsgrad des Antriebssystems sich wesentlich verbessert. Ferner fällt diese Rückspeiseschaltung 28 preiswerter aus als eine Bremsschaltung 22.

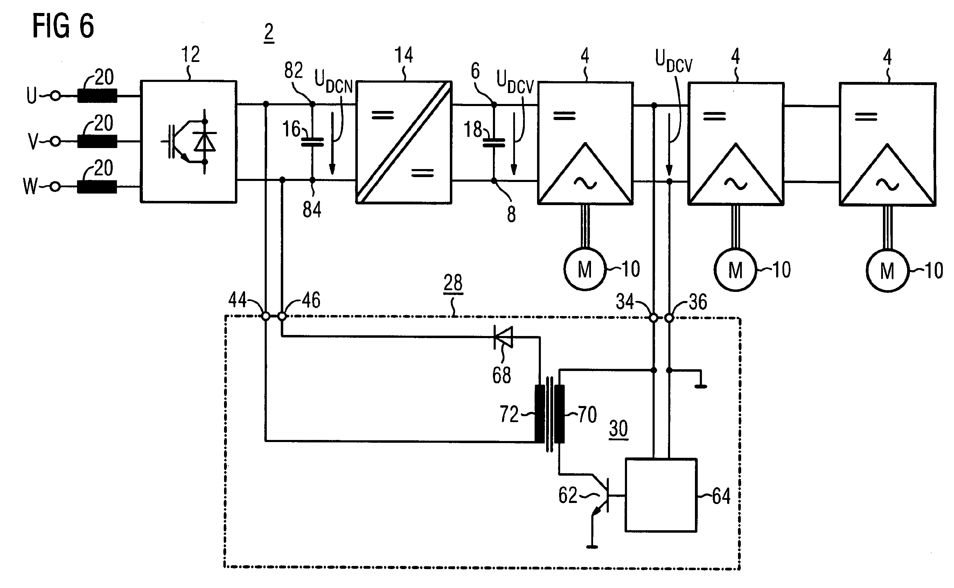

Die FIG 6 zeigt eine zweite Ausführungsform eines Antriebssystems nach der Erfindung. Bei dieser Ausführungsform ist der eingangsseitige netzgeführte Stromrichter 12 derart ausgeführt, dass dieser den Strom bidirektional führen kann. Dazu ist jeder Diode dieses Gleichrichters ein elektronisch steuerbarer Schalter elektrisch parallel geschaltet. Diese elektronisch steuerbaren Schalter werden jeweils während der Leitphasen der korrespondierenden Dioden leitend geschaltet, wodurch ein Strom bidirektional fließen kann. Somit entspricht dieser ausgeführte bidirektionale Gleichrichter 12 dem netzgeführten bidirektionalen Gleichrichter 32 der Rückspeiseeinrichtung 28 nach FIG 3. Da der netzseitige Stromrichter 12 der zentralen Einspeisung 2 des Antriebssystems bereits rückspeisefähig ausgebildet ist, wird ein derartiger Stromrichter 32 ausgangsseitig in der Rückspeiseeinrichtung, an sich nicht mehr benötigt. Somit verbleibt in dieser Rückspeiseeinrichtung 28 nur noch der DC/DC-Wandler 30. Außerdem wird diese Rückspeiseeinrichtung 28 ausgangsseitig nicht mehr mit Eingangs-Anschlüssen des netzgeführten Stromrichters 12 der zentralen Einspeisung 2 verbunden, sondern mit den Anschlüssen 82 und 84 des Pufferkondensators 16 der zentralen Einspeisung 2. Da die Rückspeiseeinrichtung 28 ausgangsseitig elektrisch parallel zu diesem Pufferkondensator 16 geschaltet wird, entfällt ebenfalls der ausgangsseitige Pufferkondensator 66 des DC/DC-Wandlers 30.

In den Figuren 3 bis 6 sind jeweils als DC/DC-Wandler 30 ein Sperrwandler veranschaulicht. Als DC/DC-Wandler 30 kann ebenfalls ein Flusswandler verwendet werden. Bei der Realisierung des DC/DC-Wandlers 30 kommt es weniger darauf an, welche Ausführungsform gewählt wird. Der DC/DC-Wandler 30 soll dafür sorgen, dass die Rückspeisespannung U_{DCVR}, die aus der anstehenden Versorgungsspannung U_{DCV} am ausgangsseitigen Kondensator 18 der zentralen Einspeisung 2 generiert wird, den Gleichrichtwert der Netzspannung des speisenden Netzes um einen vorbestimmten Betrag übersteigt. Nur dann wird ein Strom durch den netzgeführten bidirektionalen Gleichrichter 32 bzw. 12 in das speisende Netz des Antriebssystems fließen.

Durch die Verwendung der erfindungsgemäßen Rückspeiseeinrichtung 28 an Stelle einer Bremsschaltung 22 wird der Wirkungsgrad des Antriebssystems wesentlich verbessert, wobei diese ebenfalls preiswerter ist. Ein derartiges Antriebssystem wird vorteilhafter Weise bei einen modularen Fördersystem verwendet.

## Patentansprüche

1. Antriebssystem mit einer zentralen Einspeisung (2) und mehreren motorseitigen Stromrichtern (4), die jeweils gleichspannungsseitig mit einem geregelten Gleichspannungs-Ausgang der zentralen Einspeisung (2) verknüpft sind, wobei diese zentrale Einspeisung (2) eingangsseitig einen netzgeführten Stromrichter (12) und ausgangseitig mit einem DC/DC-Wandler (14), der ein- und ausgangsseitig jeweils mit einem Pufferkondensator (16, 18) versehen ist, aufweist, **dadurch gekennzeichnet, dass** eine Rückspeiseeinrichtung (28) vorgesehen ist, die eingangsseitig mit dem geregelten Ausgang der zentralen Einspeisung (2) und ausgangsseitig mit wenigstens zwei Eingängen des netzgeführten Stromrichters (12) verknüpft ist.

2. Antriebssystem nach Anspruch 1, **dadurch gekennzeichnet, dass** die Rückspeiseeinrichtung (28) eingangsseitig einen DC/DC-Wandler (30) und ausgangsseitig einen netzgeführten bidirektionalen Gleichrichter (32) aufweist, die gleichspannungsseitig miteinander verknüpft sind.

3. Antriebssystem nach Anspruch 1 oder 2, **dadurch gekennzeichnet, dass** der DC/DC-Wandler (30) eine Hilfsstromversorgungs-Einrichtung aufweist.

4. Antriebssystem nach einem der Ansprüche 1 bis 3, **dadurch gekennzeichnet, dass** eine Steuereinrichtung (42) des bidirektionalen netzgeführten Gleichrichters (32) der Rückspeiseeinrichtung (28) einerseits mit der Hilfsstromversorgungs-Einrichtung und andererseits potential getrennt mit den Eingängen der Rückspeiseeinrichtung (44, 46, 48) verbunden ist.

5. Antriebssystem nach einem der Ansprüche 1 bis 4, **dadurch gekennzeichnet, dass** der netzgeführte bidirektionale Gleichrichter (32) der Rückspeiseeinrichtung (28) dreiphasig ausgeführt ist.

6. Antriebssystem nach einem der Ansprüche 1 bis 4, **dadurch gekennzeichnet, dass** der netzgeführte bidirektionale Gleichrichter (32) der Rückspeiseeinrichtung (28) zweiphasig ausgeführt ist.

7. Antriebssystem nach einem der vorgenannten Ansprüche, **dadurch gekennzeichnet, dass** der DC/DC-Wandler (30) ein Sperrwandler ist.

8. Antriebssystem nach einem der Ansprüche 1 bis 6, **dadurch gekennzeichnet, dass** der DC/DC-Wandler (30) ein Flusswandler ist.

9. Antriebssystem nach Anspruch 4, **dadurch gekennzeichnet, dass** die Hilfsstromversorgungs-Einrichtung eine Hilfswicklung (74) des DC/DC-Wandlers (30) ist, der eine Diode (80) nachgeschaltet ist.

10. Antriebssystem nach einem der vorgenannten Ansprüche, **dadurch gekennzeichnet, dass** der netzgeführte bidirektionale Gleichrichter (32) ein netzgeführter Gleichrichter ist, dessen Dioden (D1,...,D6) jeweils ein elektronisch steuerbarer Schalter (T1,...,T6) elektrisch parallel geschaltet sind, die steuerungsseitig jeweils mit einem Steuerausgang der Steuereinrichtung (42) verbunden sind, und deren Eingänge untereinander mittels Kondensatoren (56) verknüpft sind.

11. Antriebssystem nach 10, **dadurch gekennzeichnet, dass** als elektronisch steuerbarer Schalter (T1,...T6) ein Insulated-Gate-Bipolar-Transistor vorgesehen ist.

12. Antriebssystem mit einer zentralen Einspeisung (2) und mehreren motorseitigen Stromrichtern (4), die jeweils gleichspannungsseitig mit einem geregelten Gleichspannungs-Ausgang der zentralen Einspeisung (2) verknüpft sind, wobei die zentrale Einspeisung (2) eingangsseitig einen netzgeführten bidirektionalen Gleichrichter (12) und ausgangsseitig einen DC/DC-Wandler (14), der ein- und ausgangsseitig jeweils mit einem Pufferkondensator (16, 18) versehen ist, aufweist, **dadurch gekennzeichnet, dass** eine Rückspeiseeinrichtung (28) vorgesehen ist, die eingangsseitig mit dem geregelten Ausgang der zentralen Einspeisung (2) und ausgangsseitig mit dem Gleichspannungs-Ausgang des netzgeführten bidirektionalen Stromrichters (12) der zentralen Einspeisung (2) verknüpft ist.

13. Antriebssystem nach Anspruch 12, **dadurch gekennzeichnet, dass** die Rückspeiseeinrichtung (28) ein DC/DC-Wandler (30) ist.

14. Antriebssystem nach Anspruch 13, **dadurch gekennzeichnet, dass** der DC/DC-Wandler (30) ein Sperrwandler ist.

15. Antriebssystem nach Anspruch 13, **dadurch gekennzeichnet, dass** der DC/DC-Wandler (30) ein Flusswandler ist.

16. Verwendung des Antriebssystems nach einem der vorgenannten Ansprüche bei einem Fördersystem.
